# EUROPÄISCHE PATENTANMELDUNG

(11) **EP 2 306 255 A2**
(43) Veröffentlichungstag der Anmeldung: **06.04.2011**
(21) Anmeldenummer: 10174290.6
(22) Anmeldetag: 27.08.2010
(51) Int. Cl.: G05B 19/418

(54) **Verfahren zum Auswechseln von Werkzeugen bei einem Verpackungs- und Lagersystem, Computerprogramm hierzu und Verpackungs- und Lagersystem**

(30) Priorität: 01.10.2009 DE 102009044163
(71) Anmelder: Krones AG, 93073 Neutraubling (DE)
(72) Erfinder: Hutter, Alban, 83242, Reit im Winkl (DE)
(74) Vertreter: Benninger, Johannes

(57) **Zusammenfassung**

Die vorliegende Erfindung betrifft ein Verfahren und ein Computerprogramm zum Umrüsten einer Verpackungsstraße (60). Weiterhin betrifft die Erfindung ein Verpackungs- und Lagersystem zum Zusammenstellen und Verpacken und/oder Umpacken von Artikeln.

Bei dem erfindungsgemäßen Verfahren wird aufgrund der gewünschten Artikelzusammenstellung ermittelt, welche Werkzeuge (100, 100u, 100v, 100x, 100y) in der Verpackungsstraße (60) benötigt werden und es wird ein entsprechender rechnergesteuerter Austausch der Werkzeuge (100, 100u, 100v, 100x, 100y) an der Verpackungsstraße (60) vorgenommen. Die entnommenen und nicht mehr benötigten Werkzeuge werden anschließend eingelagert.

## Beschreibung

Die vorliegende Erfindung betrifft ein Verfahren und ein Computerprogramm zum Auswechseln von Werkzeugen einer Verpackungsstraße sowie eine entsprechende Vorrichtung gemäß den Merkmalen des Oberbegriffes der Ansprüche 1, 5 und 7.

### Stand der Technik

Gefüllte Getränkebehälter, insbesondere befüllte Flaschen, werden für den vereinfachten Transport und Verkauf in Gebinden zusammengefasst. Diese Gebinde umfassen meist eine gerade Anzahl von gleichartigen Artikeln, vorzugsweise werden sechs, acht oder zwölf Artikel zu einer solchen Einheit verpackt und beispielsweise mit einer Schrumpffolie oder einer Kartonumverpackung umhüllt.

DE 42 16 721 A1 offenbart ein Verfahren und eine Vorrichtung zum Ein- und Auspacken von Artikeln in Gebinde oder aus Gebinden, wobei die von Greifern genommenen Artikel in einer Umlaufbahn kontinuierlich geführt werden.

DE 37 32 283 C1 beschreibt eine Vorrichtung zum Ein- und Auspacken von gebindeweise angeordneten Gegenständen mit einem Greiferkopf, der auf einem Tragrahmen lösbar festlegbar ist und mittels eines bewegbaren Tragarms antreibbar ist. Die Vorrichtung weist ein dem Tragrahmen benachbartes Magazin auf, das mehrere Fächer für jeweils einen Greiferkopf aufweist und das innerhalb des Bewegungsfelds des Tragrahmens liegt. Dadurch ist ein mechanisierter und automatisierter Wechsel des Greiferkopfes möglich.Weiterhin kann es für den Transport zum Kunden, beispielsweise zum Getränkehändler, erwünscht sein, dass Artikel gemäß einer gewünschten Zusammensetzung zusammenfasst sind. Beispielsweise werden eine bestimmte Anzahl X an Gebinden einer ersten Getränkeart und eine bestimmte Anzahl Y an Gebinden einer zweiten Getränkeart gewünscht.

Oder aber es werden Mischgebinde mit Flaschen unterschiedlichen Inhalts gewünscht, die entsprechend zusammengestellt werden müssen. Das Zusammenfassen und Verpacken solcher Mischgebinde erfolgt automatisiert in einer Verpackungsstraße. Die zu verpackenden Artikel werden im Allgemeinen über Transporteinheiten, beispielsweise über Endlosförderer, der Verpackungsstraße zugeführt.

DE 20 2005 019 906 U1 beschreibt einen Mischpacker zum Bilden von Mischgebinden von Stückgütern, der aus mindestens zwei Förderlinien für Gebinde und einem linienübergreifendem Umsetzer besteht, wobei der Umsetzer eine Greifeinrichtung für die Gebinde aufweist.

DE 10 2005 039 842 A1 beschreibt ein Verfahren zur Herstellung von Mischgebinden sowie eine entsprechende Vorrichtung dafür. Hierbei werden sortenreine Gebinde jeweils einem Auspacker zugeführt und die Behälter nach dem Auspacken auf mindestens einer Pufferstrecke angeordnet und anschließend zu Mischgebinden zusammengestellt.

Die zusammengestellten Gebinde oder Mischgebinde werden im Allgemeinen mit einer entsprechenden Umverpackung beispielsweise einem Umkarton versehen. Hierfür ist das Zuführen von entsprechenden Kartonzuschnitten notwendig.

EP 0 729 888 A1 zeigt ein Verfahren und eine Anlage zur automatischen Zuführung von Kartonzuschnitten zum Verpacken einer Mehrzahl von zu Gruppen zusammengefassten Gegenständen, wobei die Kartonzuschnitte in einem Magazin bevorratet sind, mittels eines Abnehmers aus diesem entnommen und den Gegenständen zugeführt werden. Zuvor werden die Kartonzuschnitte mittels eines weiteren Abnehmers von einem Zuschnittstapel einzeln abgenommen und mittels eines Transportsystems dem Magazin zugeführt.

DE 34 39 908 A1 beschreibt eine Maschine zum Auffalten von Kartons aus ebenen Zuschnitten mit einem mehrarmigen Zuführer, an dessen Armenden jeweils ein Greifelement angeordnet ist. Ein Greifelement greift den Zuschnitt und ein anderes Greifelement drückt den Zuschnitt in die Faltausbildung einer Auffaltstation, so dass die gewünschten Falten generiert und der Karton entsprechend aufgefaltet wird.

DE 34 00 822 A1 offenbart ein Verfahren zum Verpacken von Warengruppen in einer Faltschachtel und eine entsprechende Vorrichtung. Die zusammengestellte Warengruppe wird auf einen ungefalteten Schachtelzuschnitt aufgelegt und in einer Anpressstation wird die Faltschachtel um die Warengruppe herum ausgebildet.

Damit die Verpackungsstraße unterschiedliche Artikel zu den gewünschten Gebinden bzw. Mischgebinden zusammenstellen kann, werden unterschiedliche Werkzeuge benötigt, die entsprechend der gewünschten Mischgebinde ausgetauscht werden müssen.

DE 195 10 498 A1 zeigt eine Werkzeugwechseleinrichtung, die einen aus mehreren Teilspeichern bestehenden Werkzeugspeicher, einen längs des Teilspeichers verfahrbaren Wechslerständer und einen am Wechslerständer vertikal verfahrbaren Greiferschlitten mit Greiferkopf aufweist. Die Teilspeicher sind um vertikale Achsen drehbar und besitzen um die Drehachsen verteilte Werkzeugspeicherplätze. Dies ermöglicht eine kompakte und flexible Bauweise.

WO 2007/147969 A2 beschreibt eine Verpackungsstraße, die einen Transportkopf mit tulpenförmigen Greifköpfen aufweist, wobei diese abhängig von der Form der Flaschen einfach durch andere Werkzeuge ersetzt werden können. Die dafür notwendigen unterschiedlichen Werkzeuge werden in einem mobilen Lager bereitgestellt, das auf Schienen läuft und eine aktive und eine inaktive Position einnehmen kann.

Aufgabe der Erfindung besteht darin, eine Verpackungsstraße gesteuert umzurüsten. Die obige Aufgabe wird durch ein Verfahren und ein Computerprogramm gelöst, die die Merkmale der Patentansprüche 1 und 5 umfassen. Die obige Aufgabe wird weiterhin durch eine Vorrichtung gelöst, die die Merkmale des Patentanspruchs 7 umfasst.

### Beschreibung

Die vorliegende Erfindung betrifft ein Verfahren zum Umrüsten einer Verpackungsstraße. Der Verpackungsstraße ist mindestens ein erster Lagerplatz für zu verpackende Artikel (insbesondere für befüllte Flaschen oder Gebinde aus befüllten Flaschen) und mindestens ein zweiter Lagerplatz für die Werkzeuge der Verpackungsstraße zugeordnet. Bei den Werkzeugen für die Verpackungsstraße handelt es sich beispielsweise um an unterschiedliche Flaschenformen bzw. Flaschengrößen angepasste Greiferköpfe, Werkzeuge zur Kartonfaltung etc.

Bei den Lagerplätzen handelt es sich beispielsweise um Hochregallager. Gemäß einer bevorzugten Ausführungsform befinden sich der erste Lagerplatz für die Artikel und der zweite Lagerplatz für die Werkzeuge in einem gemeinsamen Hochregallager angeordnet und werden gemeinsam verwaltet. Ein solches gemeinsames Hochregallager kann also beispielsweise Palettenstellplätze, Paletten mit Artikeln, Paletten mit Werkzeugen oder auch Verpackungsmaterial lagern.

Gemäß einer alternativen Ausführungsform können mindestens zwei getrennte Hochregallager verwendet werden, wobei in einem ersten Hochregallager die zu verpackenden und/oder umzupackenden Artikel eingelagert und zwischengespeichert werden und in einem zweiten Hochregallager die verschiedenen Werkzeuge für die Verpackungsstraße angeordnet sind.

Bei dem erfindungsgemäßen Verfahren wird zuerst die gewünschte Artikelzusammenstellung in eine Rechnereinheit eingegeben. Daraufhin ermittelt der Rechner die für die Artikelzusammenstellung erforderliche Soll-Werkzeugbestückung der Verpackungsstraße. Die ermittelte Soll- Werkzeugbestückung wird mit der Ist-Werkzeugbestückung der Verpackungsstraße verglichen. Dieser Vergleich erfolgt entweder durch eine bedienende Person, dem so genannten Operator oder aber direkt durch den Rechner. Ergibt sich hierbei eine Differenz, dann ermittelt der Rechner oder der Operator die für die Bereitstellung der Soll-Werkzeugbestückung der Verpackungsstraße zuzuführenden und der von der Verpackungsstraße zu entnehmenden Werkzeuge. D.h. der Rechner stellt fest, welche Werkzeuge in der Verpackungsstraße verbleiben können und welche Werkzeuge ausgetauscht werden müssen. Oder aber der Operator ermittelt die Differenz und gibt einen entsprechenden Steuerungsbefehl in eine entsprechende Bedieneinheit ein, wobei aufgrund des Steuerungsbefehls die entsprechenden Werkzeuge aus dem Lager angefordert und der Verpackungsstraße zugeführt werden.

Anschließend steuert ein Rechner die Entnahme der für die Umrüstung notwendigen ermittelten Werkzeuge aus dem zweiten Lagerplatz für die Werkzeuge. Die angeforderten Werkzeuge werden zur Verpackungsstraße transportiert und an der Verpackungsstraße ausgetauscht, so dass die Verpackungsstraße anschließend die ermittelte Soll-Werkzeugbestückung aufweist.

Der Austausch der Werkzeuge an der Verpackungsstraße kann beispielsweise manuell durch einen Operator erfolgen. Gemäß einer bevorzugten alternativen Ausführungsform erfolgt der Austausch der Werkzeuge an der Verpackungsstraße automatisiert, beispielsweise durch einen der Verpackungsstraße zugeordneten Roboter.

Die ausgetauschten, entnommenen und nicht mehr benötigten Werkzeuge werden anschließend zu dem zweiten Lagerplatz zurück transportiert und dort eingelagert. Somit wird der Platz in und um die Verpackungsstraße von nicht benötigten, herumliegenden Werkzeuge freigehalten.

Gemäß einer Ausführungsform kann die Entnahme der für die gewünschte Artikelzusammenstellung benötigten Artikel vom ersten Lagerplatz ebenfalls rechnergesteuert erfolgen. Insbesondere ermittelt der Rechner die für die gewünschte Artikelzusammenstellung und Anzahl an Artikelzusammenstellungen notwendigen Artikel und steuert die zeitlich angepasste Entnahme der Artikel aus dem Lager.

Die zusammenzustellenden, d.h. zu kommissionierenden, Artikel werden an einem ersten Lagerplatz, beispielsweise in einem Hochregallager, bereitgestellt. Weiterhin kann das nötige Verpackungsmaterial in einem Lager zwischengespeichert werden, wobei sich dieses entweder direkt an der Verpackungsstraße befindet oder aber mit dieser über ein Transportsystem verbunden ist. Bei dem Verpackungsmaterial handelt es sich beispielsweise um Kartonzuschnitte, Getränkekästen, Gefache oder Ähnlichem.

Die Artikel und/oder die Werkzeuge und/oder das Verpackungsmaterial werden gemäß einer Ausführungsform mittels Transportträgern über ein Transportsystem vom Lagerplatz zur Verpackungsstraße transportiert. Hierbei werden die beladenen Transportträger über eine Hubeinrichtung angehoben und in Führungsschienen vom Lagerplatz zur Verpackungsstraße geführt. Die Artikel und/oder die Werkzeuge und/oder das Verpackungsmaterial werden an die Verpackungsstraße übergeben und die unbeladenen Transportträger werden abgesenkt und in Transportschienen von der Verpackungsstraße zum Hochregallager zurückgeführt, wobei sie gegebenenfalls nicht benötigte Werkzeuge der Verpackungsstraße zum Lager zurück transportieren.

Weiterhin betrifft die Erfindung ein Computerprogramm für die Steuerung eines Verpackungs- und Lagersystems. Das Verpackungs- und Lagersystem umfasst mindestens eine Verpakkungsstraße zum Zusammenstellen und Verpacken oder Umpacken von Artikeln, insbesondere von befüllten Flaschen und/oder Gebinden aus befüllten Flaschen. Weiterhin umfasst das Verpackungs- und Lagersystem mindestens einen Lagerplatz zur Lagerung der Artikel, insbesondere zur Speicherung von Flaschen unterschiedlichen Typs und/oder unterschiedlichen Inhaltes. Das Verpackungs- und Lagersystem weist weiterhin mindestens einen zweiten Lagerplatz zur Aufbewahrung von Wechselwerkzeugen für die Verpackungsstraße auf, da die Werkzeugausstattung der Verpackungsstraße entsprechend der zu verpackenden bzw. umzupackenden Artikel jeweils angepasst werden muss.

Nach Eingabe der gewünschten Artikelzusammenstellung ermittelt das Computerprogramm die für die Artikelzusammenstellung erforderliche Soll-Werkzeugbestückung der Verpackungsstraße und vergleicht diese mit der Ist-Werkzeugbestückung der Verpackungsstraße. Aus dem sich daraus ergebenden Unterschied werden die der Verpackungsstraße zuzuführenden und die von der Verpackungsstraße zu entnehmenden Werkzeuge bestimmt. Weiterhin kann die Software dazu dienen, die Entnahme der für die Umrüstung notwendigen ermittelten Werkzeuge aus dem zweiten Lagerplatz und die Umrüstung der Werkzeuge an der Verpackungsstraße anzusteuern.

Gemäß einer weiteren Ausführungsform steuert das Computerprogramm zudem den Rücktransport der aus der Verpackungsstraße entnommenen, für die Erstellung der gewünschten Artikelzusammensetzung nicht benötigten Werkzeuge und die Einlagerung dieser entnommenen Werkzeuge am zweiten Lagerplatz.

Die Erfindung betrifft zudem ein Verpackungs- und Lagersystem zum Zusammenstellen und Verpacken und/oder Umpacken von Artikeln. Vorzugsweise betrifft die Erfindung ein Verpackungs- und Lagersystem zum Erstellen von Mischgebinden aus Flaschen unterschiedlichen Typs und/oder Inhaltes bzw. zum Erstellen von Misch-Großgebinden aus Gebinden von Flaschen unterschiedlichen Typs und/oder Inhaltes.

Das Verpackungs- und Lagersystem umfasst eine zentrale Rechnereinheit, wenigstens ein Lager für die zu verpackenden Artikel und/oder für Werkzeuge für die Verpackungsstraße und/oder für Verpackungsmaterial, weiterhin ein Transportsystem für den Transport der Artikel und/oder der Werkzeuge und/oder des Verpackungsmaterials sowie eine Verpackungsstraße zum Zusammenstellen und Verpacken der Artikel. Die zentrale Rechnereinheit dient hierbei der Steuerung der Werkzeugumrüstung und des Werkzeugtransports zwischen dem mindestens einen Lager und der Verpackungsstraße.

Gemäß einer Ausführungsform sind die Wechselwerkzeuge für die Verpackungsstraße mit einem Identifizierungsmittel ausgestattet, wobei die darin gespeicherte bzw. abgebildete Information mittels einer Erkennungseinheit ausgelesen werden kann und somit der einfachen Identifizierung der unterschiedlichen Werkzeuge dient.

Gemäß einer Ausführungsform sind die Werkzeuge jeweils mit einem RFID Chip, einem so genannten Transponder, ausgestattet. Die Verpackungsstraße umfasst einen Empfänger, der über Funk die auf dem RFID Chip gespeicherten Daten auslesen und somit einfach die Ist-Werkzeugbestückung ermitteln kann. Die ermittelten Daten werden beispielsweise an die Recheneinheit gesendet, die daraus die Differenz zwischen Soll- und Ist-Werkzeugbestückung ermittelt.

Gemäß einer weiteren alternativen Ausführungsform sind die Wechselwerkzeuge mit einem Strichcode, auch Bar-Code genannt, ausgestattet. Die durch den Strichcode abgebildeten Daten werden mit in der Verpackungsstraße und / oder in dem Hochregallager angeordneten optischen Lesegerräten, wie z.B. Barcodelesegeräten (Scanner) oder Kameras, maschinell eingelesen und elektronisch weiterverarbeitet.

Es ist natürlich auch möglich, dass ein Operator mit einer entsprechenden Erkennungseinheit die Werkzeuge manuell identifiziert und die entsprechende Information beispielsweise in eine Steuereinheit eingibt, die dann die Entnahme der benötigten Werkzeuge aus dem Lager ansteuert.

Bezüglich des Lagerplatzes und des Transportsystems wird auf die obige Beschreibung verwiesen.

Die Verpackungsstraße kann modular aufgebaut sein, d.h. das Zusammenfassen und Verpacken von Artikelzusammenstellungen erfolgt dann automatisiert mittels unterschiedlicher Verpackungsmodule, die zu einer Verpackungsstraße zusammengefasst sind. Die Verpackungsstraße besteht also aus verschiedenen Modulen für das Zusammenstellen und Verpacken bzw. Umpacken von Artikeln, wobei jedes Modul frei austauschbar ist. Es werden beispielsweise ein Modul zum Gruppieren, ein Modul zum Einschlagen der gruppierten Behälter mit Folie und ein Schrumpftunnel hintereinander zu einer Verpackungsstraße zusammengefasst.

Gemäß einer weiteren Ausführungsform werden Artikel in Kartonumverpackungen verpackt. Die entsprechende Verpackungsstraße umfasst mindestens ein KartonierModul, das mit einem Zulauf-, einem Einsetz- und mindestens einem Verschließmodul kombiniert wird, wobei mindestens eines der Module einen Faltschritt für die Kartonzuschnitte vorsieht.

Weiterhin können noch Module vorgesehen sein, die Wechselwerkzeuge bereitstellen, beispielsweise um die einzelnen Module der Verpackungsstraße an unterschiedliche zu verpackende Artikel oder ähnliches anzupassen.

### Fiaurenbeschreibuna

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
- Figur 1: zeigt eine schematische Darstellung der Möglichkeiten der Artikelzusammenstellung (Stand der Technik).
- Figur 2: zeigt schematisch eine OFFLINE-Anordnung eines Verpackungs- und Lagersystems.
- Figur 3: zeigt schematisch die Anordnung eines Lagerplatzes für Wechselwerkzeuge in einer OFFLINE- Anordnung eines Verpackungs- und Lagersystems.
- Figur 4 A/B: zeigt schematisch eine Verpackungsstraße.
- Figur 5: zeigt eine OFFLINE-Anordnung eines Verpackungs- und Lagersystem.
- Figuren 6/7: zeigen Details eines Werkzeugwechselsystems.
- Figur 8: zeigt die Anordnung eines Transportsystems.
- Figur 9: zeigt Details des Transportsystems.
- Figuren 10 bis 12: zeigen Werkzeuge für die Verpackung von Gebinden.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

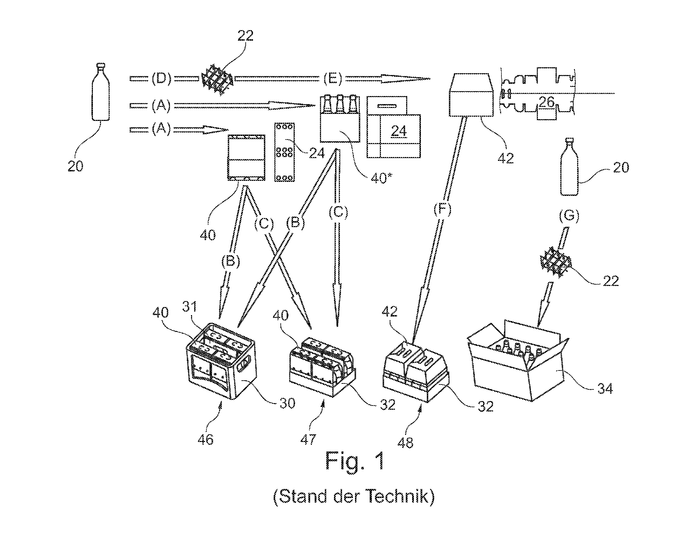

**Figur 1** zeigt eine schematische Darstellung von unterschiedlichen Möglichkeiten der Gebindeerstellung. Die zu verpackenden Artikel, insbesondere Flaschen 20, werden zu Gebinden 40, 40* bestehend beispielsweise aus sechs Flaschen 20 zusammengestellt und in Faltverpackungen 24 verpackt, die innere Abtrennungen (Gefache) aufweisen, damit die Flaschen 20 sicher in der Faltverpackung 24 gehaltert sind und beim Transport nicht aneinanderstoßen **(A).**

Anschließend können mehrere Gebinde 40, 40* beispielsweise in einer Umverpackung 30 aus Plastik mit Haltegriff 31 zu einem Großgebinde 46 angeordnet werden **(B)** oder auf einer Art Tablett mit erhöhtem Rand, genannt Tray 32, zu einem Großgebinde 47 angeordnet werden.

Damit die Anordnung bestehend aus mehreren Gebinden 40, 40* auf einem Tray 32 (vgl. **(C)**) beim Transport auch zusammenhält, ist es möglich, die Anordnung mit einer weiteren Umhüllung, beispielsweise einer Schrumpffolie (nicht dargestellt), sicher zusammenzuhalten.

Weiterhin ist es möglich, die Flaschen 20 in einem Gefache 22 anzuordnen **(D)** und anschließend in einer Faltverpackung 26 zu größeren Gebinden 42, in denen beispielsweise zwölf Flaschen 20 zusammengefasst sind, zusammenzustellen **(E).** Diese Gebinde 42 können anschließend wieder auf einem Tray 32 zu Großgebinden 48 zusammengefasst werden **(F).**

Eine weitere Möglichkeit der Gebindeerstellung **(G)** besteht darin, die Flaschen 20 in einem Gefache 22 und anschließend in einem Karton 34 anzuordnen und somit ein Großgebinde 49 zu erstellen.

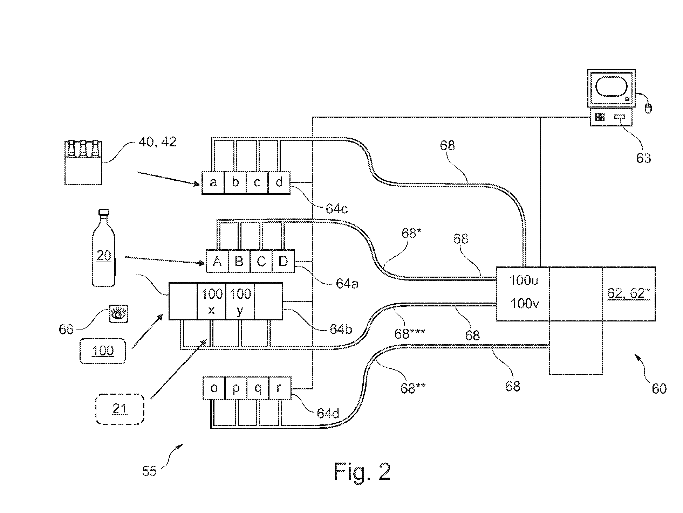

**Figur 2** zeigt schematisch eine OFFLINE-Anordnung eines Verpackungs- und Lagersystem 55. Unter einer OFFLINE-Anlage versteht man eine Anlage, die als Umpackanlage dient, um die gegebenenfalls bereits in ersten Gebinden zusammengestellten Flaschen in die gewünschte Endverpackung zu überführen. Die dargestellte OFFLINE-Anordnung umfasst minde-stens eine modularen Verpackungsstraße 60 mit Verpackungsmodulen 62, 62*, vier Hochregallager 64a, 64b, 64c und 64d und ein Transportsystem 68.

In dem Verpackungs- und Lagersystem 55 werden gefüllte Flaschen 20 oder Gebinde 40, 42, Verpackungsmaterial 21 [beispielsweise Gefache (22; vgl. **Figur 1**), Faltverpackung mit oder ohne Gefache (24, 26; vgl. **Figur 1**), Zuschnitte für Umverpackungen aus Karton oder Kunststoff (28,30; vgl. **Figur 1**)], Werkzeuge 100u, 100v, 100x, 100y für die Verpackungsmodule 62, 62* etc. zuerst in wenigstens einem automatischen Hochregallager 64b zwischengelagert. In der hier dargestellten Ausführungsform werden die unterschiedlichen Artikel 20, 40, 42, Werkzeuge 100u, 100v, 100x, 100y, Verpackungsmaterial 21 etc. jeweils in gesonderten Hochregallagern 64a bis 64d zwischengelagert. Beispielsweise werden verschiedene Flaschen 20 unterschiedlichen Typs und gegebenenfalls unterschiedlichen Inhalts A, B, C und D im Hochregallager 64a zwischengelagert, wohingegen verschiedene Gebinde von Flaschen 40, 42 mit unterschiedlichem Inhalt a, b, c und d im Hochregallager 64c zwischengelagert werden. Werkzeuge 100u, 100v, 100x, 100y für die Verpackungsstraße 60 werden dagegen im Hochregallager 64b und Verpackungsmaterial 21 im Hochregallager 64d abrufbar zwischengespeichert.

Je nach Kundenauftrag werden anschließend neue Gebinde oder Großgebinde kommissioniert. Um dies sicher erledigen zu können, ist eine Anpassung der Werkzeuge 100u, 100v, 100x, 100y der Verpackungsstraße 60 nötig. Diese Anpassung muss möglichst zeitsparend durchgeführt werden können, um längere Stillstandzeiten der Verpackungsstraße 60 zu vermeiden. Aus diesem Grund sind die Bereitstellung der befüllten Flaschen 20 aus dem Hochregallager 64a, die Umstellung der Maschinen in der Verpackungsstraße 60, insbesondere in den Einzelmodulen 62, 62*, und der Wechsel von demontierbaren Werkzeugen 100u, 100v, 100x, 100y erfindungsgemäß zumindest teilweise automatisiert und zentral gesteuert.

Vorzugsweise wird die Automatisierung durch eine zentrale Steuereinheit 63 kontrolliert. Bei der Steuereinheit 63 handelt es sich beispielsweise um einen Rechner, in den die gewünschte Zusammenstellung der Artikel eingegeben wird und der dann die Umstellung der Einzelmodule 62, 62* durch Wechsel der Werkzeuge 100u, 100v, 100x, 100y vornimmt und weiterhin die Auswahl der Produkte 20, 40, 42 und des nötigen Verpackungsmaterials 21 ansteuert, so dass diese über das Transportsystem 68, beispielsweise über einen Flaschenzulauf 68* der Verpackungsstraße 60 zugeführt werden.

Gemäß einer weiteren Ausführungsform werden die Flaschen 20 im Hochregallager 64a auf Paletten bereitgestellt, die über einen speziellen, gegebenenfalls der Palettenbreite angepassten Transportweg 68 der Verpackungsstraße 60 zugeführt werden.

Weiterhin können Roboterzellen 66 mit dem Transportsystem 68 gekoppelt sein, um die produktbezogenen Werkzeuge 100x, 100y - beispielsweise spezielle Greifwerkzeuge, spezielle Faltwerkzeuge, entsprechende Produktaufnahmen, Kartonführungen etc. - in die Verpackungsstraße 60 einzubringen. Dadurch ist die Verpackung einer Vielzahl von unterschiedlichen Produkten 20, 40, 42 möglich.

Gemäß der gezeigten Ausführungsform ist der Verpackungsstraße 60 ein zentrales Hochregallager 64 oder mehrere Einzel-Hochregallager 64a, 64b, 64c und 64d zugeordnet. Das Hochregallager 64 ist mit der Verpackungsstraße 60 über ein Transportsystem 68 verbunden, das beispielsweise Paletten oder Ähnliches als einheitliche Transportträger aufweist. Über diese Transportträger werden der Verpackungsstraße 60 über erste Transportwege 68* das zu verpackende Produkt, beispielsweise Flaschen 20 oder Gebinde 40,42, und über zweite und gegebenenfalls weitere Transportwege 68** beispielsweise das notwendige Verpackungsmaterial 21 aus dem Hochregallager 64c (o, p, q, r), zugeführt.

Vorzugsweise werden über dritte Transportwege 68*** auch die nötigen Werkzeuge 100x, 100y zur Verpackungsstraße 60 transportiert. Dies folgt derselben Logistik wie bereits oben beschrieben wurde. D.h. die Steuereinheit 63 gibt an oder eine Roboterzelle 66 erkennt, welche Produkte 20, 40, 42 verarbeitet werden sollen. Daraus ergibt sich, welches Werkzeug 100x, 100y benötigt wird und dieses wird automatisch aus dem Hochregallager 64, 64b angefordert und an einem Lagerplatz auf den Transportträger - beispielsweise auf eine Palette - aufgeladen. Der Transportträger wird über das Transportsystem 68, 68*** zur Verpackungsstraße 60 befördert und somit wird das Werkzeug 100x, 100y zur Verpackungsstraße 60 transportiert.

Dort angekommen kann das Werkzeug 100x, 100y manuell durch einen Operator angebracht werden, d.h. dieser entnimmt das Werkzeug 100x, 100y dem Transportträger und setzt es in dem entsprechenden Modul 62, 62* der Verpackungsstraße 60 ein bzw. tauscht es gegen das Werkzeug 100u, 100v aus. Alternativ kann der Transportträger auch direkt in das entsprechende Modul 62, 62* der Verpackungsstraße 60 gefahren werden, wo sich ein geeigneter Roboter das entsprechende Werkzeug 100x, 100y selbständig greift, nachdem er das vorher verwendete Werkzeug 100u, 100v selbständig entfernt und auf einem Transportträger zum automatischen Rücktransport in das Hochregallager 64, 64b abgelegt hat.

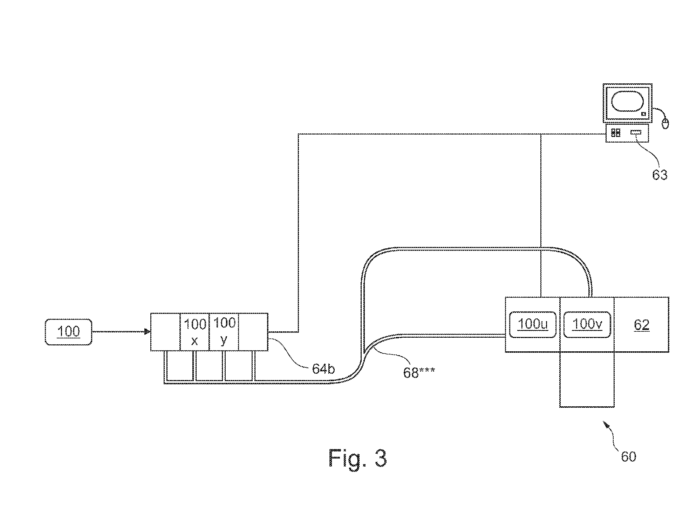

**Figur 3** stellt noch einmal schematisch die Anordnung eines Lagerplatzes für Wechselwerkzeuge 100x, 100y in einem Verpackungs- und Lagersystem 55 dar. Die Wechselwerkzeuge 100x, 100y befinden sich in einem Lagerplatz, beispielsweise in einem Hochregallager 64b. Dieser Lagerplatz 64b ist über einen Transportweg 68*** mit der Verpackungsstraße 60 verbunden. Die Verpackungsstraße 60 ist mit den Werkzeugen 100u, 100v bestückt. Ermittelt nun die Recheneinheit 63, dass für die neue gewünschte Artikelzusammenstellung andere Werkzeuge, beispielsweise die Werkzeuge 100x, 100y, benötigt werden, so bewirkt die Recheneinheit 63 durch gezieltes Ansteuern, dass die Werkzeuge 100x, 100y aus dem Lager 64b entnommen und der Verpackungsstraße 60 zugeführt werden. Anschließend werden die Werkzeuge 100u, 100v gegen die Werkzeuge 100x, 100y ausgetauscht. Die nicht mehr benötigten Werkzeuge 100u, 100v werden zum Lager 64b zurücktransportiert und dort eingelagert.

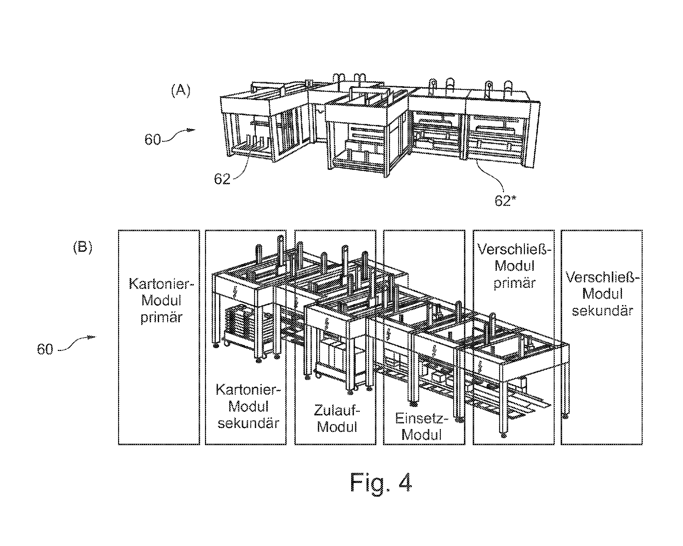

**Figur 4** zeigt eine mögliche Anordnung einer Verpackungsstraße 60. Die dargestellte Verpackungsstraße 60 ist modular aufgebaut, wobei die einzelnen Verpackungsmodule 62, 62* und weitere gemäß der gewünschten Gebinde und deren Verpackung (vgl. **Figur 1**) entsprechend zusammengestellt und angeordnet werden.

Die Verpackungsstraße 60 besteht aus verschiedenen Modulen 62, 62* für das Verpacken bzw. Umpacken von Artikeln, wobei jedes Modul frei austauschbar ist. Es können beispielsweise ein Modul zum Gruppieren, ein Modul zum Einschlagen der gruppierten Behälter mit Folie und ein Schrumpftunnel hintereinander zu einer Verpackungsstraße 60 zusammengefasst werden. Weiterhin können noch Module 62, 62* vorgesehen sein, die Wechselwerkzeuge bereitstellen, beispielsweise um die einzelnen Module 62, 62* der Verpackungsstraße an unterschiedliche zu verpackende Artikel oder Ähnliches anzupassen.

In **Figur 4(B)** ist der Aufbau einer modularen Verpackungsstraße 60 dargestellt, bei der die Artikel in Kartonumverpackungen zusammengestellt werden. Die gezeigte Verpackungsstraße 60 besteht aus einem primären und einem sekundären Kartoniermodul, einem Zulaufmodul, einem Einsetzmodul und einem primären und einem sekundären Verschließmodul.

Ein Vorteil des modularen Aufbaus besteht in der konsequenten Trennung der Verarbeitungsschritte. Der einfache Wechsel der Werkzeuge 100, 100u, 100v, 100x, 100y, der gegebenenfalls nur in einem der Module 62, 62*] notwendig ist, ermöglicht eine große Flexibilität, so dass unterschiedlichste Artikel in unterschiedlichsten Verpackungen zusammengestellt werden können.

Modulare Verpackungsstraßen 60 können als so genannte INLINE-Verpackungsstraßen konzipiert werden, d.h. sie werden direkt in einer Linie nach der Füll- und Etikettierstation angeordnet. Weiterhin ist die Verwendung als OFFLINE-Anlage möglich, die als Umpackanlage dient, um die gegebenenfalls bereits in ersten Gebinden zusammengestellten Flaschen in die gewünschte Endverpackung zu überführen.

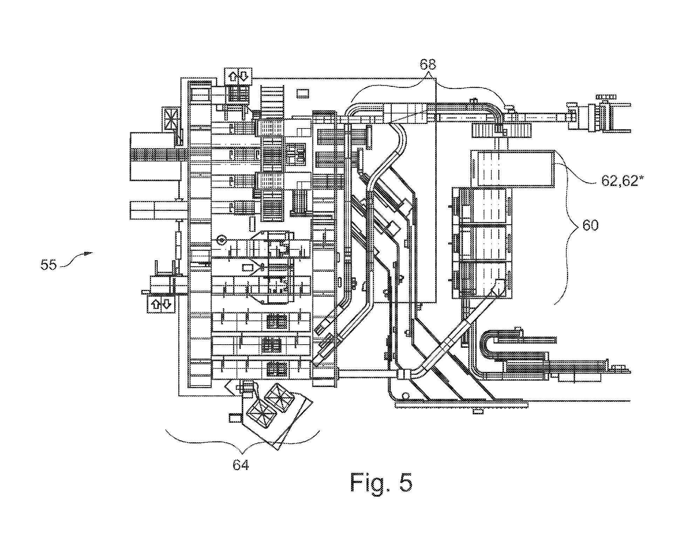

**Figur 5** zeigt noch einmal detailliert eine OFFLINE-Anordnung eines Verpackungs- und Lagersystems 55. Wegen der Beschreibung wird auf die **Figuren 2** **und** **3** verwiesen.

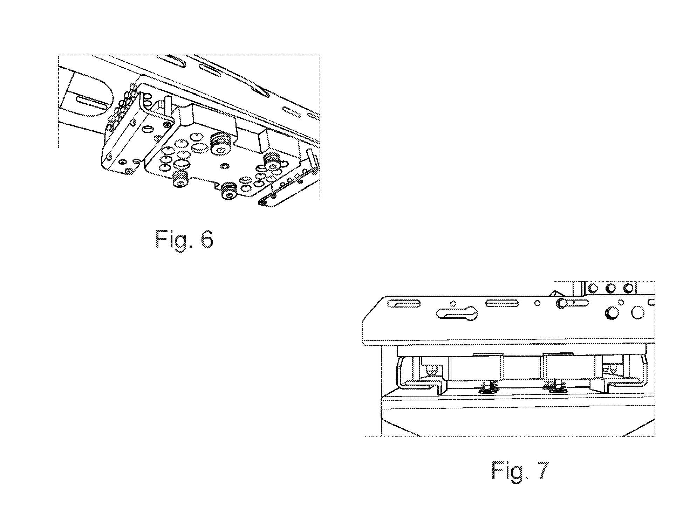

**Figur 6** und **Figur 7** zeigen Details eines Werkzeugwechselsystems. Hierbei handelt es sich um ein automatisches Kopplungssystem, bei dem der Roboter der Module 62, 62* der Verpackungsstraße 60 die Werkzeuge 100, 100u, 100v, 100x, 100y selbständig greifen und erkennen kann. Dies unterscheidet sich vom herkömmlichen Stand der Technik, bei dem die entsprechenden Werkzeuge 100, 100u, 100v, 100x, 100y im Greifbereich des Roboters positioniert waren und der Wechsel des nötigen Werkzeugs 100, 100u, 100v, 100x, 100y mit einer Software angesteuert wurde.

Die Befestigung der Werkzeuge 100, 100u, 100v, 100x, 100y erfolgt vorzugsweise durch Anlegen von Unterdruck. D.h. die Werkzeugaufnahme weist Öffnungen auf, durch die Unterdruck angelegt werden kann, so dass das Werkzeug 100, 100u, 100v, 100x, 100y angesaugt und festgehalten werden kann. Dieses System ermöglicht eine erleichterte Übergabe der Werkzeuge 100, 100u, 100v, 100x, 100y, da es voll automatisiert ablaufen kann. Aufgrund bestimmter rechnergesteuerter Signale wird am Werkzeughalter Unterdruck angelegt und das Werkzeug 100, 100u, 100v, 100x, 100y angesaugt und gehaltert. Durch Umschalten auf Druckluft wird das Werkzeug 100, 100u, 100v, 100x, 100y dagegen wieder vom Werkzeughalter gelöst.

Weitere Befestigungen der Werkzeuge 100, 100u, 100v, 100x, 100y sind ebenfalls denkbar und von der Erfindung umfasst. Auch Verschraubungen der Werkzeuge 100, 100u, 100v, 100x, 100y mit dem Werkzeughalter sind insbesondere bei manuellem Austausch möglich. Ebenso ist ein Einhaken in entsprechende Befestigungsvorrichtungen am Werkzeughalter möglich, dies ist gegebenenfalls sogar durch einen Roboter durchführbar.

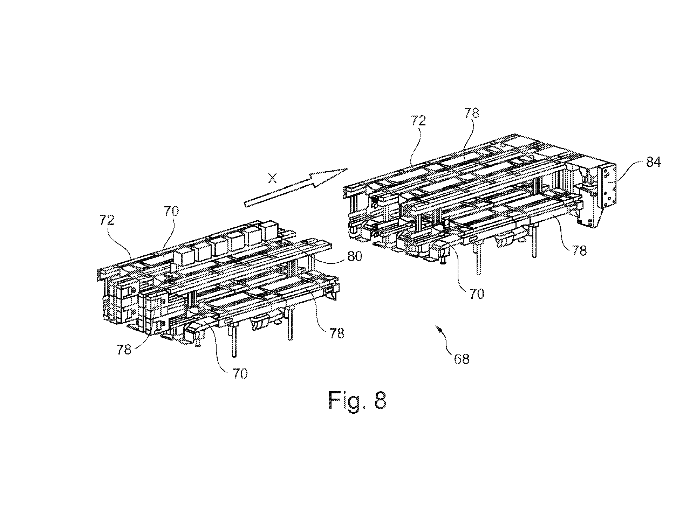

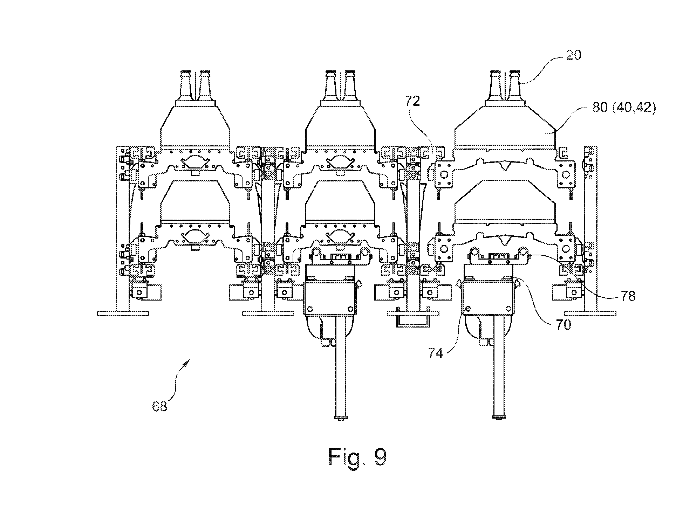

**Figur 8** zeigt die Anordnung eines Transportsystems 68 und **Figur 9** zeigt Details dieses Transportsystems 68. Das Transportsystem 68 umfasst Transportschienen 70 und Führungsschienen 72. Die zu transportierenden Teile, d.h. das Transportgut 80 - dabei kann es sich um zu verpackende Artikel, beispielsweise Flaschen 20 / Gebinde 40, 42; um Werkzeuge 100, 100u, 100v, 100x, 100y oder um Verpackungsmaterial 21 etc. handeln - werden auf Transportträgern 78 transportiert, die auf den Transportschienen 70 laufen. Die Transportträger 78 werden über eine Hubeinrichtung 74 auf das Transportniveau der Führungsschienen 72 gebracht und dann auf einen Kettenantrieb oder Ähnlichem eingekoppelt. Nach dem Durchlaufen des Transportsystems 68 in Transportrichtung X werden die Transportträgern 78 an der Anschlussstelle 84 zur Verpackungsstraße 60 wieder abgesenkt und über einen Kettenrücklauf wieder zum Hochregallager zurücktransportiert.

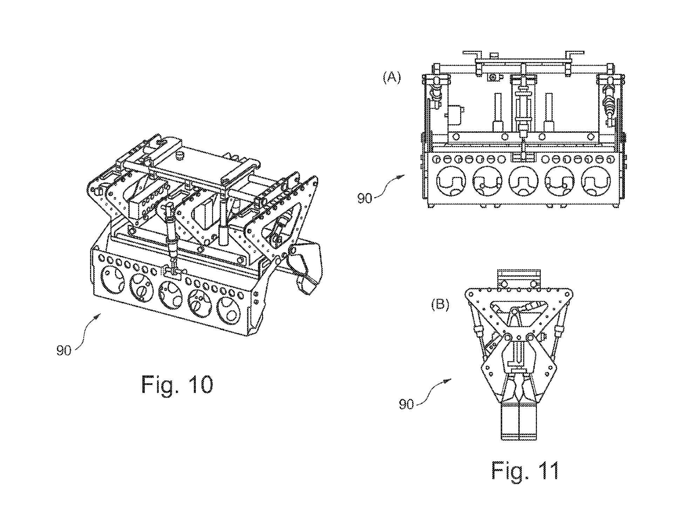

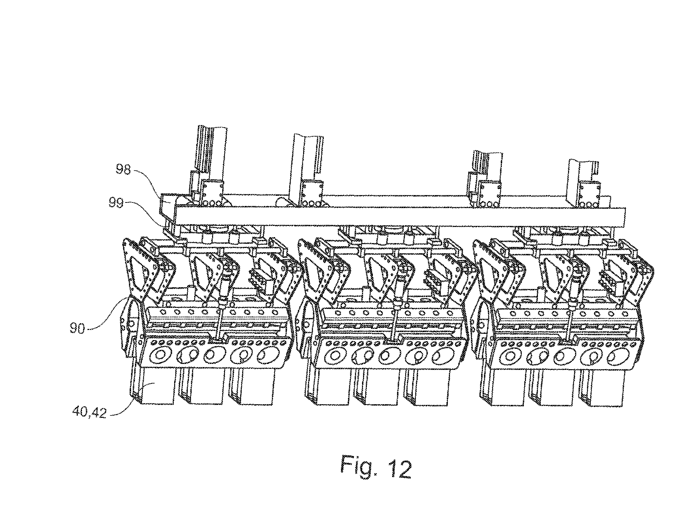

**Figuren 10 bis 12** zeigen beispielhaft spezielle Werkzeuge, die in den Modulen 62, 62* der Verpackungsstraße 60 (vgl. **Figuren 2 bis 4**) zur Verpackung oder Umverpackung von Artikeln eingesetzt werden und den Modulen 62, 62* über das oben beschriebene Transportsystem 68 zugeführt werden. Hierbei handelt es sich um um einen Verschließkopf 90 zum Verschließen eines Kartons um ein Flaschengebinde 40,42.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen. Insbesondere muss die Verpackungsstraße 60 nicht modular 62, 62* aufgebaut sein. Stattdessen kann es sich um jede beliebige aus dem Stand der Technik bekannte Verpackungsmaschine handeln.

### Bezuaszeichenliste:

- 20: Flaschen
- 21: Verpackungsmaterial
- 22: Gefache
- 24: Faltverpackung mit Gefache
- 26: Faltverpackung ohne Gefache
- 28: Umverpackung aus Karton
- 30: Umverpackung aus Kunststoff / Getränkekasten
- 31: Haltegriff
- 32: Tray
- 34: Karton
- 40: Gebinde aus sechs Flaschen
- 40*: Gebinde aus sechs Flaschen
- 42: Gebinde aus zwölf Flaschen
- 46: Großgebinde
- 47: Großgebinde
- 48: Großgebinde
- 49: Großgebinde
- 55: Verpackungs- und Lagersystem
- 60: Verpackungsstraße
- 62: Verpackungsmodul
- 62*: Verpackungsmodul
- 63: Steuereinheit
- 64, 64a-d: Hochregallager
- 66: Roboterzellen
- 68: Transportsystem
- 68*: Flaschenzulauf / erster Transportweg
- 68**: Zulauf für Verpackungsmaterial / zweiter Transportweg
- 68***: Werkzeug- Zulauf / dritter Transportweg
- 70: Transportschienen
- 72: Führungsschienen
- 74: Hubeinrichtung
- 78: Transportträger
- 80: Transportgut
- 84: Anschlussstelle zur Verpackungsstraße
- 90: Verschließkopf
- 98: Führungsschiene
- 99: Werkzeugaufnahme / Werkzeugträger
- 100: Werkzeug für Verpackungsstraße
- 100u,v,x,y: Werkzeug für Verpackungsstraße
- X: Transportrichtung

## Patentansprüche

1. Verfahren zum Umrüsten einer Verpackungsstraße (60), wobei der Verpackungsstraße (60) mindestens ein er-ster Lagerplatz (64, 64a, 64c) für zu verpackende Artikel (20, 40, 42) und mindestens ein zweiter Lagerplatz (64, 64b) für Werkzeuge (100, 100u, 100v, 100x, 100y) zugeordnet ist, **gekennzeichnet durch** die folgenden Schritte:
• Eingabe der gewünschten Artikelzusammenstellung in eine Rechnereinheit (63);
• Rechner gesteuerte Ermittlung der für die Artikelzusammenstellung erforderlichen Soll-Werkzeugbestückung (100, 100x, 100y) der Verpackungsstraße (60);
• Vergleich der Ist-Werkzeugbestückung (100, 100u, 100v) der Verpackungsstraße (60) mit der ermittelten erforderlichen Soll-Werkzeugbestückung (100, 100x, 100y);
• Ermittlung der für die Bereitstellung der Soll-Werkzeugbestückung (100, 100x, 100y) der Verpackungsstraße (60) zuzuführenden und der von der Verpackungsstraße zu entnehmenden Werkzeuge (100, 100u, 100v) aus dem vorhergehenden Vergleich;
• Rechner gesteuerte Entnahme der für die Umrüstung notwendigen ermittelten Werkzeuge (100, 100x, 100y) aus dem zweiten Lager (64, 64b), Transport der Werkzeuge (100) zur Verpackungsstraße (60) und Austausch der Werkzeuge (100, 100u, 100v, 100x, 100y) zur Bereitstellung der ermittelten Soll-Werkzeugbestückung (100, 100x, 100y) und
• Rücktransport der aus der Verpackungsstraße (60) entnommenen Werkzeuge (100, 100u, 100v)und Einlagerung der entnommenen Werkzeuge (100, 100u, 100v) am zweiten Lagerplatz (64, 64b).

2. Verfahren nach Anspruch 1, wobei der Vergleich der Ist-Werkzeugbestückung (100, 100u, 100v) der Verpackungsstraße (60) mit der ermittelten erforderlichen Soll-Werkzeugbestückung (100, 100x, 100y) durch einen Rechner (63) erfolgt.

3. Verfahren nach Anspruch 1 oder 2, wobei die Ermittlung der für die Bereitstellung der Soll-Werkzeugbestückung (100, 100x, 100y) der Verpackungsstraße (60) zuzuführenden und der von der Verpackungsstraße zu entnehmenden Werkzeuge (100, 100u, 100v) aus dem vorhergehenden Vergleich durch einen Rechner (63) erfolgt.

4. Verfahren nach einem der voranstehenden Ansprüche , wobei die nicht benötigte Ist-Werkzeugbestückung (100, 100u, 100v) automatisch ausgebaut und die ermittelte Soll-Werkzeugbestückung (100, 100x, 100y) automatisch eingebaut wird.

5. Verfahren nach einem der voranstehenden Ansprüche , wobei die Verpackungsstraße (55) mindestens einen Roboter aufweist und wobei der Roboter für den automatisch Ein- und Ausbau der Werkzeuge (100, 100u, 100v, 100x, 100y) genutzt wird.

6. Verfahren nach einem der voranstehenden Ansprüche , wobei die Entnahme der für die gewünschte Artikelzusammenstellung benötigten Artikel (20, 40, 42) aus einem Lager (64, 64a, 64c) rechnergesteuert erfolgt.

7. Computerprogramm für die Steuerung eines Verpackungs- und Lagersystems (55), wobei das Verpackungs- und Lagersystem (55) aus mindestens einer Verpackungsstraße (60), mindestens einem ersten Lagerplatz für Artikel (64, 64a, 64c) und mindestens einem zweiten Lagerplatz (64, 64b) für Werkzeuge (100,100u, 100v, 100x, 100y) für die Verpackungsstraße (60) besteht und wobei das Computerprogramm nach Eingabe einer gewünschten Artikelzusammenstellung
• die erforderlichen Soll- Werkzeugbestückung (100, 100x, 100y) der Verpackungsstraße (60) für die Artikelzusammenstellung ermittelt,
• die Ist-Werkzeugbestückung (100, 100u, 100v) der Verpackungsstraße (60) mit der ermittelten erforderlichen Soll-Werkzeugbestückung (100, 100x, 100y) vergleicht,
• aus dem Vergleich die für die Bereitstellung der Soll-Werkzeugbestückung (100, 100x, 100y) der Verpackungsstraße (60) zuzuführenden und der von der Verpackungsstraße (60) zu entnehmenden Werkzeuge (100, 100u, 100v, 100x, 100y) bestimmt und
• die Entnahme der für die Umrüstung notwendigen ermittelten Werkzeuge (100, 100x, 100y) von dem zweiten Lagerplatz (64, 64b), den Transport der Werkzeuge (100, 100x, 100y) zur Verpackungsstraße (60) und den Austausch der Werkzeuge (100, 100u, 100v, 100x, 100y) zur Bereitstellung der ermittelten Soll-Werkzeugbestückung (100, 100x, 100y) steuert.

8. Computerprogramm nach Anspruch 7, wobei das Computerprogramm den Rücktransport der aus der Verpackungsstraße (60) entnommenen Werkzeuge (100, 100u, 100v) und Einlagerung der entnommenen Werkzeuge (100, 100u, 100v) am zweiten Lagerplatz (64, 64b) steuert.

9. Verpackungs- und Lagersystem (55) zum Zusammenstellen und Verpacken und/oder Umpacken von Artikeln (20, 40, 42), **dadurch gekennzeichnet, dass** das Verpackungs- und Lagersystem (55) eine zentrale Rechnereinheit (63), wenigstens einen Lagerplatz (64, 64a, 64b, 64c, 64d) für die zu verpackenden Artikel (20, 40, 42) und/oder für Werkzeuge (100, 100u, 100v, 100x, 100y) für die Verpackungsstraße (60) und/oder für Verpackungsmaterial, ein Transportsystem (68) und eine Verpackungsstraße (60) umfasst, wobei mit der zentralen Rechnereinheit (63) die Werkzeugumrüstung und der Werkzeugtransport zwischen dem mindestens einen Lagerplatz (64, 64a, 64b, 64c, 64d) und der Verpackungsstraße (60) steuerbar ist.

10. Verpackungs- und Lagersystem (55) nach Anspruch 9, wobei mit dem Verpackungs- und Lagersystem (55) Gebinde aus befüllten Flaschen (20) unterschiedlichen Typs und/oder Inhalts (A, B, C, D) zusammenstellbar sind.

11. Verpackungs- und Lagersystem (55) nach Anspruch 9 oder 10, wobei die Werkzeuge (100, 100u, 100v, 100x, 100y) für die Verpackungsstraße (60) jeweils mit einem Identifizierungsmittel ausgestattet sind.

12. Verpackungs- und Lagersystem (55) nach Anspruch 11, wobei die Verpackungsstraße (60) mit einer Erkennungseinheit für die von einem Identifizierungsmerkmal gespeicherten und / oder übermittelten Daten ausgestattet ist.

13. Verpackungs- und Lagersystem (55) nach einem der Ansprüche 10 bis 12, wobei der mindestens eine Lagerplatz (64, 64a, 64b, 64c, 64d) ein Hochregallager ist.

14. Verpackungs- und Lagersystem (55) nach einem der Ansprüche 10 bis 13, wobei das Transportsystem (68) mindestens einen Transportträger (78), mindestens eine Führungsschiene (72), mindestens eine Transportschiene (70) und mindestens eine Hubeinrichtung (74) umfasst.

15. Verpackungs- und Lagersystem (55) nach einem der Ansprüche 10 bis 14, wobei die Verpackungsstraße (60) wenigstens zwei Verpackungsmodule (62, 62*) umfasst.
